# EUROPEAN PATENT APPLICATION

(11) **EP 1 054 553 A2**
(43) Date of publication of application: **22.11.2000**
(21) Application number: 00303961.7
(22) Date of filing: 11.05.2000
(51) Int. Cl.: H04M 1/65, H04H 1/00

(54) **Answerphone system**

(30) Priority: 18.05.1999 GB 9911547
(71) Applicant: Pace Micro Technology PLC, Shipley, West Yorkshire BD18 3LF (GB)
(72) Inventor: Prior, Hugh, Bullhill, Darwen, Lancashire BB3 2TP (GB)
(74) Representative: Wood, Graham

(57) **Abstract**

The invention relates to an answerphone system provided in conjunction with a broadcast data receiver. The receiver is provided with a connection to a telecommunications line and can also receive data from any or any combination of a satellite data transmission system, a cable data transmission system and/or a terrestrial data transmission system to generate video and/or audio and/or auxiliary data for the generation of television programmes and receives via the telecommunications line, telephone calls for the user of the apparatus and/or control data for the broadcast data receiver. The answerphone system can be selectively operated to detect the subject matter of the incoming calls along the telecommunication line, store information and also, if required select to play an answerphone message.

## Description

The invention which is the subject of this application relates to the provision of an answerphone system in apparatus connected to a telephone or telecommunications line and to provide the answerphone facility as an integral part of apparatus normally used for another purpose. Particularly, but not necessarily exclusively, the apparatus in which the answerphone is provided is a broadcast data receiver for the reception of broadcast data representative of, for example, television programmes so that the data which is received by broadcast can relate to any or any combination of video data, audio data and/or ancillary or auxiliary data services such as Ceefax, electronic programme guides and the like.

In many instances, the receiver is provided in a premises and is connected to a television or monitor display screen so that broadcast data received by the receiver can be de-coded, processed and the resulting display of both visual and/or audio, is generated through the television and/or monitor display screen and the television or monitor itself or additional speakers. Frequently, the receiver is also connected to a telecommunications network and line into the premises which allows for the transmission of data to and from the receiver via a telephone line and via a modem to be provided in the receiver or in connection therewith. It should be appreciated that it is normally the case that the receiver is connected to the telecommunications line.

A problem with connection of the set-top box to the telecommunications line is that it represents an additional item of apparatus connected to the line or network in the premises and this may mean in many premises that the number of items of apparatus connected to the line exceeds the permitted value. This can occur quite easily if, for example, two telephones are provided in the premises at separate locations connected to the telecommunications line or network in conjunction with an answerphone device and, for example, a personal computer with a modem. Thus, the provision of the system including the receiver connected to the telephone line can be problematic and can result in the need to connect and disconnect items of apparatus at different times, which is obviously undesirable and irritating to the persons in the premise.

A further problem is that the number of devices connected to the telecommunications line means that when an incoming message is received via the same, there is in effect "a race" between the various items of apparatus connected as to which answers first so that, for example, if the person in the premises is out, they may set their answerphone to record while at the same time their receiver is active and, when an incoming call is received down the telephone line, the answerphone may become operable more quickly than the receiver and the message, although it may be for the receiver use, may instead be answered and locked by the answerphone or vice versa. One obvious solution is to provide additional telephone lines into premises for particular items of apparatus but this is undesirable both to the premises owner who has to pay a figure for the installation of the new telecommunications line and also to the line installer in that telephone exchanges may be overwhelmed if each premises was required to install an additional telephone line to the same.

The aim of the present invention is to provide a means whereby the number of items of apparatus which are required to be connected to a telecommunications line is reduced while allowing the operation of each piece of apparatus which is required to be connected to the line to continue and to be maintained. A further aim is to provide a system whereby the answering of an incoming telephone message to a particular item of apparatus is not blocked by the answering of the message by another item of apparatus before that for which it was intended and also to provide a means for detecting the form and content of the incoming call and processing the same accordingly.

In a first aspect of the invention there is provided an answerphone system to allow the answering of an incoming telecommunications message carried along a telecommunications line, said system comprising at least one telephone handset connected to the telecommunications line and a broadcast data receiver for data received from a remote location via satellite cable or terrestrial transmission systems, said receiver connected to the said telecommunications line and to a display screen and/or speakers for the generation of video and/or audio data thereon and wherein said receiver includes a memory device in which at least one answerphone message can be stored for selective play to a caller along the telecommunications line and for the selective reception and storage of information from incoming telephone calls, and means for retrieval of said information from said memory device.

In one embodiment, the receiver is provided to receive broadcast data from any or any combination of a satellite transmission system, a cable data transmission system and/or a terrestrial data transmission system, typically all provided for the transmission of data in a digital form, decode the data from an encoded condition, process the same and generate video, audio and/or auxiliary data. This data is not typically provided along the telecommunications line although additional or updated control data for the receiver from the broadcaster or information requests from the receiver can be carried to the receiver along the telecommunications line. Typically the receiver is provided in connection with a display screen and, in one embodiment, the means for retrieval of the information from the receiver answerphone apparatus may be operated in conjunction with the display generated on the display screen, which display includes options for selection by the user of the system to retrieve the information, delete the information, or otherwise process the information held in the storage means of the answerphone system. In one embodiment, the information which is held in the storage system can be displayed on the display screen and/or played through loudspeakers connected to the receiver.

In one embodiment the answerphone system and broadcast data receiver are connected to a telecommunications network within a premises including a number of telephones and other devices and it is preferred that when the answerphone apparatus is set to receive messages, it is the first piece of apparatus to receive and be activated by an incoming telephone message so that each incoming message passes to the answerphone apparatus in the receiver.

The answerphone system in one embodiment can be provided to determine whether the message received relates to data for the receiver and, if so, may be provided to allow the automatic transferral and receipt of the data by the receiver apparatus or alternatively, may simply record the data received for subsequent retrieval and input into the receiver apparatus. If the data received is identified as not being for the receiver, then a message may be played from the answerphone apparatus to be heard by the caller and, if the caller wishes, they can then leave a message for the owner of the telephone system which is recorded and held in the memory means of the answerphone apparatus.

In a further aspect of the invention there is provided a broadcast data receiver for receiving data transmitted from a remote location via any of satellite, cable or terrestrial broadcast systems and which data comprises any or any combination of video data, audio data and/or auxiliary data for display via a television set or monitor screen display and speakers and said broadcast data receiver is connected to a telecommunications line in the premises in which same is located and wherein there is provided within the receiver apparatus forming an answerphone system with a memory device and control means to allow the selective playing of a message to a caller when activated by an incoming telephone message and a memory device for storage of information received from the incoming telephone message.

Typically the answerphone apparatus provided in the receiver is provided as an integral part thereof so that it is not apparent externally of the receiver. The operation of the answerphone apparatus to retrieve may be added by push button as in conventional answerphones or, may alternatively be provided by a remote control facility used in conjunction with the receiver and television or display monitor connected to the receiver.

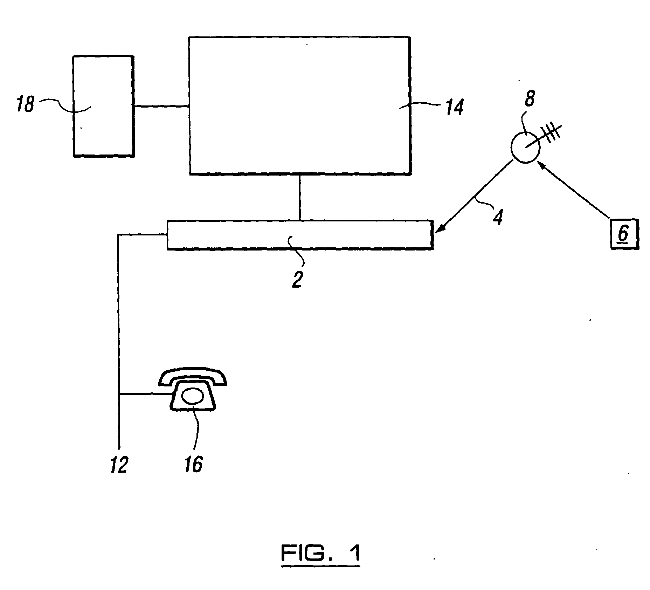

A specific embodiment of the invention will now be described with reference to the accompanying drawing which represents a schematic arrangement of apparatus in accordance with the present invention.

With reference to the accompanying drawing, there is provided a broadcast data receiver or set-top box 2 which is provided in a premises for the reception of data relating to video, audio or auxiliary broadcast data for a television service. In the example shown, the data 4 is received from a remote location 6 via a satellite transmission system 8 but data can also be transmitted by a cable system or by use of what is known as a terrestrial system. The receiver is also connected to a telecommunications or telephone line 12 within the premises to allow for the downloading and/or sending of data to and from the set-top box. Typically the receiver is connected to the same telephone line or network in the premises as is used for receiving normal telephone calls for the user or users within the premises and so the telephone line is connected to at least one handset 16 as shown.

In normal use, the receiver can be set to answer an incoming call after a number of rings or may be controlled in another manner so as to receive telephone messages over the telephone line which are directed to the same. If however a separate answerphone was connected to the telephone line in a conventional manner it too would be set to answer a telephone message after a number of rings and it can often be the case that a message which is in fact required to be received by the receiver is blocked by the answering of the same by the activated answerphone.

In order to overcome this problem, the receiver 2 in accordance with the invention is provided with answerphone apparatus integral therewith and which can be selectively set by the user of the telephone line in a conventional manner or, alternatively, with reference to a display screen 14, such as that of a television, which is connected to the receiver, normally for the generation and display of video, audio or auxiliary data received by broadcast means but which can also be used to display the current setting of the answerphone apparatus in the receiver. The display screen can also be used to display selectable options for the setting of the same which may for example be by the user operating the remote control device typically provided for the receiver in any case.

When set or activated, the answerphone apparatus has a memory device which can include at least one answerphone message for the selective play upon the receipt and identification of an incoming telephone message from a caller for the user. When the recorded message is played to the caller, there is an option, as in conventional answerphones, for that caller to leave a message which is then stored in the same or another memory device for subsequent retrieval.

The answerphone apparatus is provided with means to determine whether, perhaps by identifying known header or identification means, any incoming telephone call includes data for reception by the receiver and, if so, the answerphone apparatus can automatically direct the same to the receiver for implementation or, alternatively, may store the information in a memory device for subsequent retrieval.

The user of the system can then again refer to the television screen which may display the current status of the answerphone and decide and select to retrieve any messages or information held on the answerphone memory. The information can be played back via speakers 18 or alternatively may be displayed on the display screen.

Thus it will be appreciated that the system and apparatus of the current invention allows for the reduction of number of items of apparatus which are connected to a telephone line in a premises and also go some way to preventing the blocking and non-reception of an incoming message when the answerphone system is active as the same is integrated into the receiver apparatus, instead of "competing" with the same to answer incoming calls first.

## Claims

1. An answerphone system to allow the answering of an incoming telecommunications message carried along a telecommunications line, said system comprising at least one telephone handset connected to the telecommunications line and a broadcast data receiver for data received from a remote location via satellite cable or terrestrial transmission systems, said receiver connected to the said telecommunications line and to a display screen and/or speakers for the generation of video and/or audio data thereon and wherein said receiver includes a memory device in which at least one answerphone message can be stored for selective play to a caller along the telecommunications line and for the selective reception and storage of information from incoming telephone calls, and means for retrieval of said information from said memory device.

2. An answerphone system according to claim 1 wherein the broadcast data receiver receives data transmitted via any of a satellite data transmission system, a cable data transmission system and/or a terrestrial data transmission system to generate video and/or audio and/or auxiliary data for the generation of television programmes and receives via the telecommunications line, telephone calls for the user of the apparatus and/or control data for the broadcast data receiver which can include updates of the control data and/or requests for information relating to the operation of the broadcast data receiver.

3. An answerphone system according to claim 2 wherein the broadcast data is transmitted in digital format.

4. An answerphone system according to claim 1 wherein the broadcast data receiver is provided in connection with a display screen and the means for retrieval of the information held in the memory device is operated in conjunction with a display generated on the display screen.

5. An answerphone system according to claim 4 wherein the generated display includes a series of options which can be selected from any of, to retrieve the information, delete the information, or otherwise process the information held in the memory device.

6. An answerphone system according to claim 4 wherein the information which is held in the memory device can be displayed on the display screen and/or played through loudspeakers connected to the receiver.

7. An answerphone system according to claim 1 wherein the answerphone apparatus can be selectively set to receive and store information messages in the memory device and upon receiving the indication of an incoming call answer the same automatically by playing a stored answerphone message.

8. An answerphone system according to claim 1 wherein the broadcast data receiver is the first apparatus in a telecommunications network to receive and be activated by the incoming telephone message.

9. An answerphone system according to claim 1 wherein the broadcast data receiver includes detection means to detect whether the incoming call relates to control data for the broadcast data receiver or is a call for a user of the system.

10. An answerphone system according to claim 9 wherein if the incoming call relates to control data for the receiver the same is transferred to a control processor for the receiver for implementation or to a memory device for storage prior to implementation.

11. An answerphone system according to claim 9 wherein if the data received is identified as being for a user and if the answerphone system is activated, the answerphone message is generated and carried along the telecommunications line to the caller and, if the caller wishes, they can then leave a message for the owner of the telephone system which is recorded and held in the memory device in the broadcast data receiver.

12. A broadcast data receiver for receiving data transmitted from a remote location via any of satellite, cable or terrestrial broadcast systems and which data comprises any or any combination of video data, audio data and/or auxiliary data for display via a television set or monitor screen display and speakers and said broadcast data receiver is connected to a telecommunications line in the premises in which same is located and wherein there is provided within the receiver apparatus forming an answerphone with a memory device and control means to allow the selective playing of a message to a caller when activated by an incoming telephone message and a memory device for storage of information received from the incoming telephone message.
